(19)

**Europäisches Patentamt**
**European Patent Office**
**Office européen des brevets**

(11) **EP 1 292 877 B1**

(12) **EUROPEAN PATENT SPECIFICATION**

(45) Date of publication and mention
of the grant of the patent:
**26.03.2008 Bulletin 2008/13**

(51) Int Cl.:
**G06F 3/00** *(2006.01)*  **G06F 3/042** *(2006.01)*

(21) Application number: **01949321.2**

(22) Date of filing: **08.05.2001**

(86) International application number:
**PCT/EP2001/005186**

(87) International publication number:
**WO 2001/088681 (22.11.2001 Gazette 2001/47)**

(54) **APPARATUS AND METHOD FOR INDICATING A TARGET BY IMAGE PROCESSING WITHOUT THREE-DIMENSIONAL MODELING**

VORRICHTUNG UND VERFAHREN ZUR ANZEIGE EINES ZIELS MITTELS BILDVERARBEITUNG OHNE DREI DIMENSIONALES MODELLIEREN

DISPOSITIF ET PROCEDE SERVANT A INDIQUER UNE CIBLE PAR TRAITEMENT D'IMAGE SANS MODELISATION TRIDIMENSIONNELLE

(84) Designated Contracting States:
**AT BE CH CY DE DK ES FI FR GB GR IE IT LI LU MC NL PT SE TR**

(30) Priority: **17.05.2000 US 572991**

(43) Date of publication of application:
**19.03.2003 Bulletin 2003/12**

(73) Proprietor: **Koninklijke Philips Electronics N.V.**
**5621 BA Eindhoven (NL)**

(72) Inventors:
• **WEINSHALL, Daphna**
**NL-5656 AA Eindhoven (NL)**
• **LEE, Mi-Suen**
**NL-5656 AA Eindhoven (NL)**

(74) Representative: **Schoenmaker, Maarten**
**Philips**
**Intellectual Property & Standards**
**P.O. Box 220**
**5600 AE Eindhoven (NL)**

(56) References cited:
**US-A- 5 768 443**     **US-A- 6 147 678**

• **K. ISHIBUCHI ET AL.: "Real Time Hand Gesture Recognition using 3D Prediction Model" PROCEEDINGS OF THE 1993 INTERNATIONAL CONFERENCE ON SYSTEMS, MAN AND CYBERNETICS, vol. 5, 17 - 20 October 1993, pages 324-328, XP000462879 Le Touquet, FR**
• **M. FUKUMOTO ET AL.: ""Finger Pointer": Pointing Interface by Image Processing " COMPUTERS & GRAPHICS, vol. 18, no. 5, September 1994 (1994-09), pages 633-642, XP000546603 Oxford, GB cited in the application**
• **PATENT ABSTRACTS OF JAPAN vol. 1999, no. 11, 30 September 1999 (1999-09-30) & JP 11 161415 A (SEIKO EPSON CORP.), 18 June 1999 (1999-06-18)**
• **Y.KUNO ET AL: "Vision-Based Human Interface with User-Centered Frame" PROCEEDINGS OF THE IEEE/RSJ/GI INTERNATIONAL CONFERENCE ON INTELLIGENTROBOTS AND SYSTEMS: ADVANCED ROBOTICS AND THE REAL WORLD. MUNICH, SEPT. 12 - 16, 1994, PROCEEDINGS OF THE INTERNATIONAL CONFERENCE ON INTELLIGENT ROBOTS AND SYSTEMS (IROS), NEW YOR, vol. 3, 12 September 1994 (1994-09-12), pages 2023-2029, XP000510665 ISBN: 0-7803-1934-6**

**Description**

CROSS-REFERENCE TO RELATED APPLICATIONS

This application is related to the following, which are hereby incorporated by reference in their entirety as if fully set forth herein:

US Application 09/488, 028, filed 1/20/200 for "Multi-modal video target acquisition and re-direction system and method;"
US Application 09/532,820, filed 3/21/2000 for "Hands-Free Home Video Production Camcorder;" and
US Application 08/995,823, filed 12/22/2000 for "Method and system for gesture based option selection"

BACKGROUND OF THE INVENTION

FIELD OF THE INVENTION

The invention relates to image recognition and more particularly to the recognition, without three-dimensional modeling of a scene, of pointing gestures used to indicate a target point on a plane.

BACKGROUND

There are numerous applications that can benefit from gesture recognition. This is a natural mechanism for controlling the aim of a camera, for example. Another application is using hand gestures to move a cursor on a screen. One may envision making selections on a future smart television, for example, by simply pointing to the object on the screen with one's finger. No mouse is required.

Video-based systems that use images of a scene to interpret gestures, such as a pointing gesture indicating a target, is a rapidly-growing field. The speed of computers and the speed of image-processing are such that very convenient mechanisms for aiming and reaiming cameras, can be provided. In video-conferencing systems, for example, a user can point to an object of interest to position a zoom-capable camera on a PT base. Such automated systems are more intuitive and easier to control than conventional systems that require explicit commands such as voice-command ("command-control," basically a speech-based symbol processor where each verbal command corresponds to an instruction, for example "PAN - LEFT," "UP," "DOWN"' etc.), joystick control, and continuous target tracking. In such systems, multiple angle views are often combined to generate a three-dimensional model of a scene. The three-dimensional model is then used to determine the target to which the user is pointing.

One system that employs such "smart" technology to allow the control of a camera is described in a US Patent Application Ser. No. 08/996,677, filed 12/23/97, entitled System and Method for Permitting Three-Dimensional Navigation Through a Virtual Reality Environment Using Camera-Based Gesture Inputs. This patent application discusses a device in which a camera distinguishes the profiles of human subjects from the background using image-processing techniques. The image-processing techniques are for the purpose of distinguishing a subject from a background. The subjects can then be followed by a pan/tilt/zoom (PTZ) camera. Such a system can repeatedly position, zoom, and focus on a target so that the target remains relatively centered on the screen.

Another technique, such as described in U.S. Patent No. 5,187,574, is referred to as virtual or electronic zoom. Video information from one or more fixed cameras is processed electronically such that the target of interest remains visible in the output video signal despite the fact that the object may not be centered in the field of view of any particular camera. Through extraction and interpolation operations, the tracking process can be accomplished through fixed cameras, which are generally less expensive than PTZ cameras.

Another system is described in detail in the article "'Finger-Pointer': Pointing interface by Image Processing" by Masaaki Fukumoto, Yasuhito Suenga and Kenji Mase. In this article, the authors describe a system that directs a camera to focus on a target by having an operator located within the field of view of the system point to that target. The system scans and processes the image of the operator's finger, which directs a camera to be aimed in that general direction. The article also describes a system using a combination of pointing gestures and voice commands. Through the use of simple voice or gesture commands, the operator can direct the camera to perform simple functions, such as zoom in or out, or clear the screen. This article is incorporated by reference as if entirely set forth herein.

The prior art techniques for indicating a target generally require the creation within a computer of a three-dimensional construct of a video scene and the target area to determine what the user is pointing to. This is burdensome to set up because it requires multiple cameras and three-dimensional inference which is typically quite complex and computation intensive.

One prior art technique that does not have this limitation is described in US Patent No. 5,454,043. In the the '043 patent, hand movements are captured by a video camera and patterns of orientation and motion are resolved into commands by image processing. The technique cannot be used to indicate a target when a user stands in different locations as in the three-dimensional modeling approaches of the prior art, but it has the advantage of allowing a user to control, for example, a cursor on a video screen in a limited way.

There is a need, given the current state of the art, for a system that can interpret direction indications such as pointing gestures, but which avoids the need for registration of equipment and elements of the scene and the intensive computation associated with three-dimensional modeling of the scene.

SUMMARY OF THE INVENTION

A particular subset of three-dimensional targets are those located on a surface whose shape is known in advance. For example, the flat surface of a projection screen could contain targets to which a speaker might point. Another example is a subimage on a video screen to which a viewer might point or indicate by some other direction-indication such as pointing with a stick, the finger, a hand-movement, etc. According to the invention, a target such as described can be identified in an image of a scene without registering any information about the locations of cameras or the surface on which the target lies. The only information required *a priori* is at least some information about the shape of the surface.

The method of determining the target to which a user points, according to one embodiment, employs at least two images of a scene containing both the pointer and the target region. In this example, we assume the target is located on a flat plane that contains registration marks or fiducials that are visible in the scene images of both cameras. A pointing gesture is captured in both scenes as well. The pointing gesture is processed and resolved to the extent required to determine a line in the X-Y coordinates of the scene itself. This is done in both camera scenes. For example, points (in X-Y coordinates in units of pixels) coinciding with the right eye of the user and the tip of the finger could be used. Alternatively, a line could be defined to represent the direction indicated by a gesture and this line could be defined by any two arbitrary points on the line. These aiming pairs of points from both scenes are mapped

The respective images are morphed via the registration marks so that they mimic exactly the appearance of the plane with which the target coincides. This allows the target to be determined using only two-dimensional inference bypassing the three-dimensional inference altogether. Each image is morphed so that all points on the target plane, which may be called the reference plane, appear in the image in exactly the same location as they appear on the reference plane. As we shall describe later, a linear registration transformation can be computed if 4 corresponding points are identified in the image and the reference plane. The transformation is such that the points on the reference plane appear in the camera image in the same relative positions they would appear if the reference plane were viewed from straight on. That is, if there are four fiducials arranged in a square pattern on the reference plane, then the camera image viewing these four fiducials obliquely would be morphed such that they once again form a square in the morphed image. The morphing is done by a planar projective transform so all the points in the scene end up being distorted and all points lying on an arbitrary straight line in the original image still lie on a straight line. The second image is similarly morphed and the two images aligned so that the fiducials on the reference plane of each image coincide in a single image. Preferably, the two images will be taken from substantially different angles so that the user will appear in one camera view at a different location of the scene than in the other camera view. Straight lines are drawn between the right eye and fingertip of each image of the user and where they cross is the location of the target. Of course, the above description is purely figurative. The actual process is done numerically and only the points of concern are transformed. These points are the points in the two images joining the images of the eye and fingertip of the user.

The approach can be used in many variations. Two are considered preferable. The first, in which the cameras are located in front of the user with the user pointing toward the cameras is particularly suited to human/machine interaction such as indicating selections on a view screen or monitor. The second, pointing towards a planar surface that is visible to each camera, can be useful in multi-media applications as video conferencing.

It is envisioned that the first variation, called a "Peek Through" Configuration, would be useful for communicating via a TV or computer monitor, e.g., choosing items from a menu or playing a computer game. In this design, a vertical opaque plane with one or two polygonal apertures (aligned side by side) is positioned on top of the computer or TV monitor, approximately coplanar with the screen. Another possibility is to use a transparent extension plane, where each aperture is replaced by at least 4 feature points. The extended plane, which includes the screen and the aperture extension, is called the "reference plane."

One or two cameras lie behind the extension plane, viewing the user from behind the two apertures; each aperture (or 4 marker points) is always fully visible at the respective image periphery. (Alternatively, the two cameras may be replaced by 2 mirrors, with 1 camera recording the 2 images side-by-side.) Initially (and only once), a frontal image of the reference plane (screen + attached apertures or markers) is taken at a very narrow field of view (approximately orthographic projection), to represent the two-dimensional undistorted appearance of the reference plane. This image becomes the reference frame for purposes of computing the target location.

To compute the necessary image registration (morphing) transformation, the aperture boundaries are detected in each respective image and in the reference frame. Registration involves applying a 2D linear transformation to the image, after which the aperture boundaries in the image appear in exactly the same relationship as they do in the reference frame. Four points are sufficient to compute this transformation, as described in detail elsewhere in the specification.

In this design the user is photographed pointing towards the camera. To locate the pointing target, it is necessary to detect the user's eyes and finger-tip. To aid in the detection of the finger-tip, the user may wear a brightly colored thimble. The thimble may replace other means of interaction, such as a remote control. In addition to making finger-tip detection easier, a wearable mouse has other advantages for user-interface purposes such as providing an ability to discriminate among the pointing gestures of multiple users. Thus, a number of users wearing differently colored thimbles could simultaneously indicate the same or different targets.

It is envisioned that the second variation, the "Direct View Configuration" would be most useful for such purposes as presentations or video conferences with a big screen or in situations where the camera setup is temporary or portable. In this setup, the target plane or reference plane and the user are visible from both cameras. As in the Peek-Through Configuration, registration is based on image data alone. Four points on the reference plane are identified in each image with registration occurring with the application of a two-dimensional linear transformation to the image. Since the reference plane is typically a projection screen or white board, the points can be easily detected. These can be formed from a projection with high contrast and used momentarily to capture the setup and thereafter removed from the screen. Alternatively, two sets of parallel lines can be used instead of fiducial marks. The boundaries of the screen or whiteboard can even be used.

In the final step, one of the images may be chosen as the reference frame. The registration transformation maps the 4 identified points so that they appear in the second image in the same position as they appear in the first image. Registration is done with respect to the reference frame rather than the reference plane, which is sufficient for the identification of the pointing target.

The invention will be described in connection with certain preferred embodiments, with reference to the following illustrative figures so that it may be more fully understood. With reference to the figures, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

BRIEF DESCRIPTION OF THE DRAWING

Fig. 1 is figurative representation of setup for identifying a target location on a projection of a scene of one camera (or a reference projection) using the projection of a second camera according to one embodiment of the invention.

Fig. 2 is a figurative representation of a scene for giving definitions with respect to the projection obtained by one of the cameras according to the embodiment of Fig. 1.

Fig. 3 is a figurative representation of the scene projection taken by the camera of Fig. 2.

Fig. 4 is a figurative representation of a scene for giving definitions with respect to the projection obtained by the other one of the cameras in the embodiment of Fig. 1.

Fig. 5 is a figurative representation of the scene projection taken by the camera of Fig. 4.

Fig. 6 shows direction-indicating selected points from the scene of Fig. 5 mapped by a planar projection transform to the scene of Fig. 3 to obtain the coordinates of a target.

Fig. 7 is figurative representation of setup with a scene containing a direction vector indicating a target and used to identify the projection of a target location onto a reference projection using images from two cameras according to another embodiment of the invention.

Figs. 8 and 9 are figurative representations of the projections from the images of the camera images in the embodiment of Fig. 7.

Fig. 10 illustrates the combination of planar projection transforms of projections of a single direction vector onto a reference image to identify a target indicated by the direction vector.

Fig. 11 illustrates devices and processes that may be used to apply the invention.

DETAILED DESCRIPTION OF THE PREFERRED EMBODIMENTS

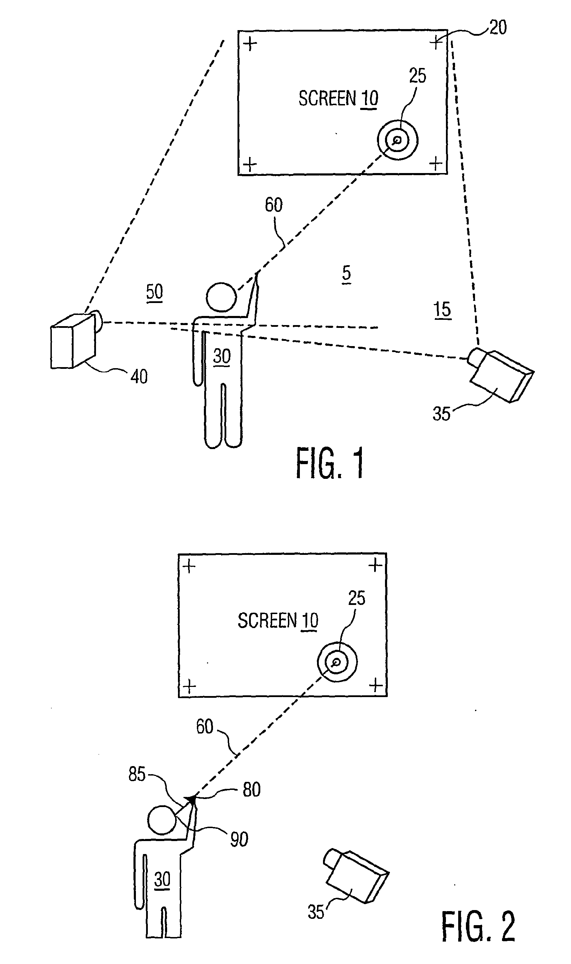

Referring to Fig. 1, a target 25 lying in/on a flat surface such as a television or projection screen 10 or a wall (not shown) is indicated by a user 30. The target location can be identified in the image of either of two cameras 35 and 40 by combining the images from the two cameras 35 and 40 in a manner described below. The illustration shows the user 30 pointing to the target 25 using a pointing gesture. It has been determined experimentally that the gesture used by people to point to a target is such that the user's fingertip, the user's right (or left) eye, and the target are joined by a straight line. This means that the planar projection of a target in the view of either one of the cameras lies along the planar projection of the straight line defined by the eye and fingertip of the user. In the invention, the planar projections of the two are transformed to a common planar projection, which could be either of the cameras 35 and 40 or an arbitrary third plane.

Referring now also to Fig. 2, the cameras are aimed so that they each capture the pointing device, in this case, the user's finger-tip 80 in combination with the user's eye 90. Also, each camera's field of view 45 and 50 is such that four registration marks 20 can be seen on the plane in/on which the target is located. The exact location or aiming of the cameras 35 and 40 is not material to the practice of the invention except, as will be obvious after further explanation of the invention, to the extent that it affects accuracy of target location. For accuracy, it is advantageous to insure that the camera images make maximal use of the resolution and accuracy (as representative of a true planar projection) of the camera images.

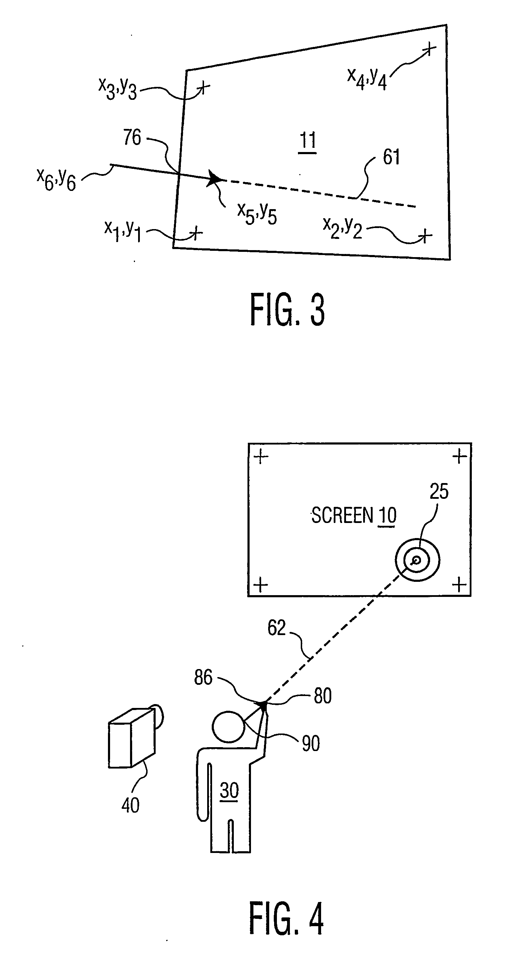

Referring now to Figs. 2 and 3, the positions of the eye 90 and finger-tip 80 of the user 30 are represented by a three-dimensional vector 85 whose planar projection in the image of camera 35 is represented as the two-dimensional vector 76. In the rest of the planar projection of the scene, the image of the screen 11 is shown distorted by foreshortening in the usual manner. An extension 61 of the vector 76 is shown which is long enough to pass through the location of the target 25, which in the context is not known. The projections of the coordinates of the registration marks 20 (Fig. 1) are identified in the image of Fig. 3 as $x_1, y_1, ... x_4, y_4$. The endpoints of the projection 76 of vector 85 are identified as $x_5$, $y_5$ and x6,y6.

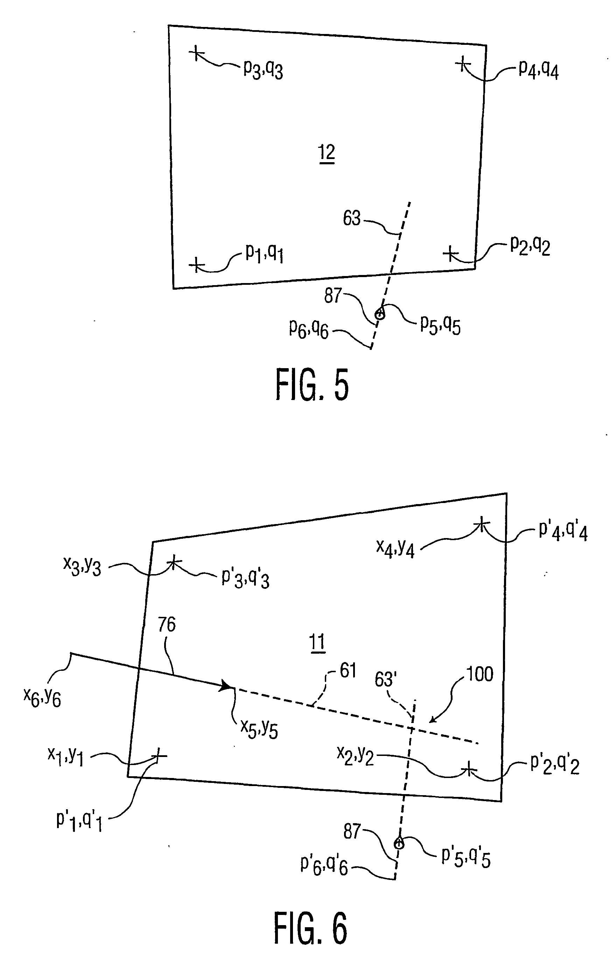

Referring now to Figs. 4 and 5, again, the positions of the eye 90 and finger-tip 80 of the user 30 are represented by a three-dimensional vector 86. The planar projection of the vector 86 in the image of camera 40 is represented as the two-dimensional vector 87. Again, the image of the screen 12 is shown distorted by foreshortening in the usual manner and of course the distortion is different because of the position and orientation of camera 40. An extension 62 of the vector 86 is shown which is long enough to pass through the location of the target 25. The planar projection of the extension 62 is indicated at 63. Again, the projection of the target's position is not known in advance. The projections of the coordinates of the registration marks 20 (Fig. 1) are identified in the image of Fig. 5 as $p_1, q_1, ... p_4, q_4$. The endpoints of the projection 87 vector 85 are identified as $p_5, q_5$ and $p_6, q_6$.

Referring to Fig. 6, the projection of Fig. 5 is shown with a transformed version 87' of the projection 87 vector 87 superposed on it. The transformed projection 87' is derived by the two-dimensional linear transform operation that maps the projection of Fig. 5 such that the points $p_1, q_1, ... p_4, q_4$ are precisely mapped respectively to the coordinates $x_1, y_1, ... x_4, y_4$. The target's location coincides with the intersection of the two extension lines.

This transform may be represented by:

$$\begin{bmatrix} w * x_i \\ w * y_i \\ w \end{bmatrix} = M \bullet \begin{bmatrix} p_i \\ q_i \\ 1 \end{bmatrix}$$

which represents the transformation exclusive of scale. Since each point provides two constraints on M and since M is a 3 x 3 matrix, defined without scale, it contains 8 unknowns and therefore can be determined using 4 independent points. This is why four registration points 20 are used. M is defined as:

so:

$$\begin{bmatrix} t_{11} & t_{12} & t_{13} \end{bmatrix}$$

$$\begin{bmatrix} w*x_i \\ w*y_i \\ w \end{bmatrix} = \begin{bmatrix} t_{11} & t_{12} & t_{13} \\ t_{21} & t_{22} & t_{23} \\ t_{31} & t_{32} & 1 \end{bmatrix}\begin{bmatrix} p_i \\ q_i \\ 1 \end{bmatrix}$$

and given the 4 points $p_1$, $q_1$, ... $p_4$, $q_4$, all the unknowns in M can be obtained by solving the following linear system of equations:

$$\begin{bmatrix} p1 & q1 & 1 & 0 & 0 & 0 & -x1*p1 & -x1*q1 \\ p2 & q2 & 1 & 0 & 0 & 0 & -x2*p2 & -x2*q2 \\ p3 & q3 & 1 & 0 & 0 & 0 & -x3*p3 & -x3*q3 \\ p4 & q4 & 1 & 0 & 0 & 0 & -x4*p4 & -x4*q4 \\ 0 & 0 & 0 & p1 & q1 & 1 & -y1*p1 & -y1*q1 \\ 0 & 0 & 0 & p2 & q2 & 1 & -y2*p2 & -y2*q2 \\ 0 & 0 & 0 & p3 & q3 & 1 & -y3*p3 & -y3*q3 \\ 0 & 0 & 0 & p4 & q4 & 1 & -y4*p4 & -y4*q4 \end{bmatrix}\begin{bmatrix} t_{11} \\ t_{12} \\ t_{13} \\ t_{21} \\ t_{22} \\ t_{23} \\ t_{31} \\ t_{32} \end{bmatrix} = \begin{bmatrix} x1 \\ x2 \\ x3 \\ x4 \\ y1 \\ y2 \\ y3 \\ y4 \end{bmatrix}$$

Once the target is identified, the information may be used to provide various features. For example, an object projected on the screen can be controlled by pointing. For this example, the two camera images could be transformed to the plane of the screen 10. Given the coordinates on the screen 10 of the target, any computer process could make use of this information. For example, a game with multiple players, each controlled by pointing gestures. Differently colored thimbles or wands could be worn/used by different players to control different objects rendered on the screen. Any tasks presently carried out with a mouse, light pen, touchscreen, etc. could be performed with pointing gestures.

Although in the embodiment described above, the target is indicated by a pointing gesture in a particular manner (eye-to-fingertip), there is no reason this indication could not be derived in other ways. For example, a sighting device or wand could be used. Also, rather than a target on a screen, the target could be any objects or images that substantially lie on a common plane. Still further, the objects or targets need not lie on a single plane, but could lie on multiple planes, each of which has a respective set of registration marks. The invention may also be extended by using other transforms so that targets can lie on surfaces other than flat surfaces. Still another variation is in the manner of gesturing to indicate a direction. A time series of images can be used to derive a direction such as the direction of a sweep of a hand or finger over a short interval of time as would attend a moving gesture to indicate a direction. Also, another suitable application would be a white-board application. Still further, the registration marks 20 need not be marks on the screen, but may be the corners of the screen 10. Also, registration marks may be projected on the screen at one point during setup and then removed. The registration point coordinates may then be used to compute the transform without further reference to the registration marks until the setup is changed. Another application of this technology is for use in aiming a camera at the target. Once the coordinates in the reference image are known, one of the two cameras or a third camera can be re-aimed and zoomed to acquire the target. This would be useful in the context of an automated videoconference system.

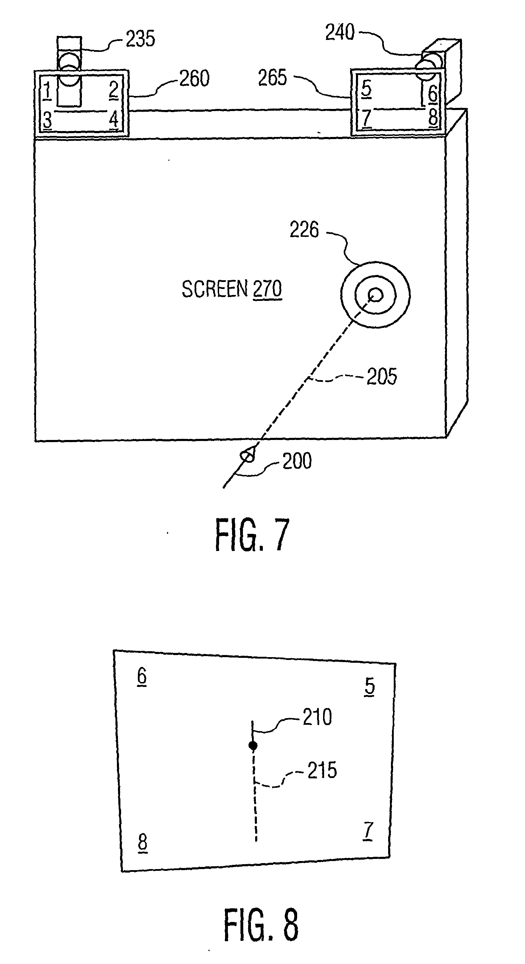

Referring now to Fig. 7, in a setup corresponding to another embodiment of the invention, a vector 200 indicates a target 226. An extension line 205 is directed along the axis of the vector 200 to the target. As in the previous embodiments discussed, the vector 200 represents any of a number of different indicating devices, for example pointing gesture. Also as in the other embodiments, the target 226 lies in/on a plane, in this example, a screen 270, for example of a large-format television. Cameras 235 and 240 are aimed through respective reference frames, 260 and 265. The reference frames 260 and 265 simply provide the registration points for 1-4 in the field of view of the camera 235 and registration points 5-8 in the field of view of the camera 240. Each camera 235 and 240 is aimed so that it views the respective set of registration points and the vector 200. Thus, for example, the setup could include a user sitting on a chair in front of a television with the cameras on top of the television and aimed at the user.

In this embodiment, the registration points are simply the corners 1-8 of the frames 260 and 265. The coordinates of these corners are preferably determined by extrapolating contour fits based on the edges of the frames to obtain positions with the greatest precision given the limited resolution of the cameras, particularly video cameras. Such techniques are well-known in the art.

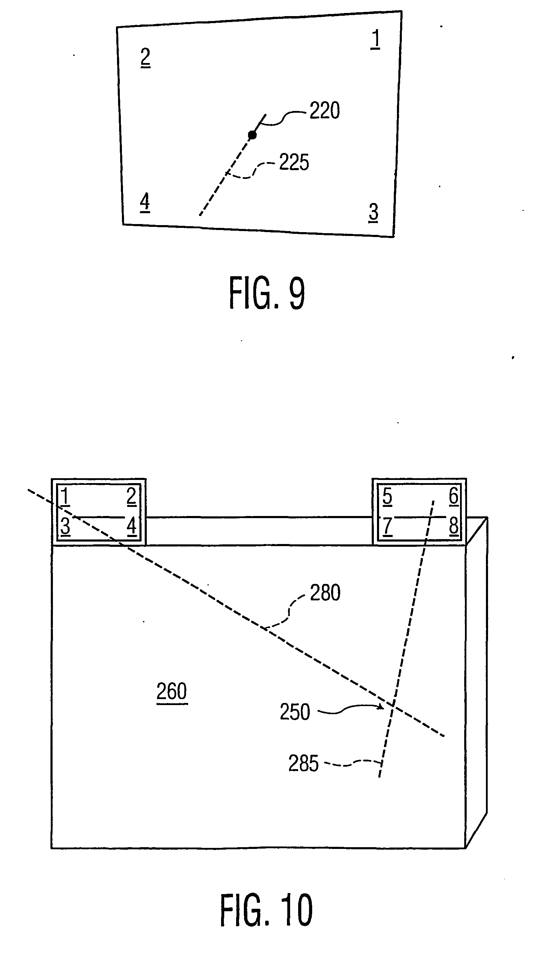

Referring to Figs. 8 and 9, the images of the cameras 240 and 235, respectively, include respective projections 210 and 220 of the pointing vector 200. Also the contours 215, 225 determined by the direction indicated by the vector projections 210 and 220 are illustrated. Fig. 7 was used to illustrate the three-dimensional scene, but its arrangement is also indicative of a projection taken from a view directed toward the screen 270. Such an image is used as a reference image in this embodiment, the vectors of both camera images being transformed to this image to determine the coordinates of the target in the reference image.

Referring to Fig. 10, which shows the scene projection of Fig. 7, after the vector images are transformed to the reference frame using the two-dimensional linear transform, the contours 215 and 225 are transformed to contours 285 and 280 respectively. The transform maps the points 1-4 in the image of Fig. 9 to the corresponding points of the image of Fig. 10. The only points that need be transformed, however, are the points that define the vector projections 210 and 220. The reference images (frames 260, 265 and the reference image of Fig. 7 or Fig. 10) need only be taken once for each setup to determine the coordinates of the reference points.

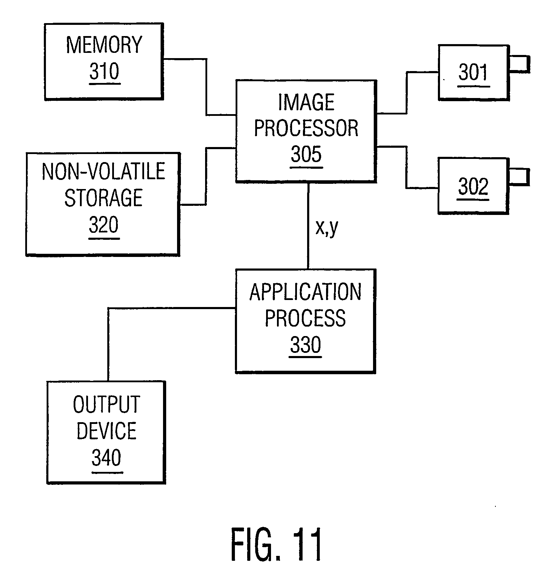

Referring now to Fig. 11, the devices and processes that may be used to implement applications of this invention are illustrated in a block diagram. An image processor 305 receives image data from cameras 301 and 302. Image and coordinate data may be stored in a memory 310 or non-volatile storage 320. For example, the transform data, once computed, may be stored in the non-volatile memory 320 and the memory 310 used in the computation of the images from the cameras 301 and 302 to derive coordinates x, y of the target which may be applied to an application process 330. The application process 330 then generates an output, such as a trace on a whiteboard or control data for an avatar of a game.

Note that the projection data gathered by the cameras 301 and 302 could also be derived from other sources such as sonar, radio, ultrasound medical equipment or any other device that is capable of forming a planar projection.

It will be evident to those skilled in the art that the invention is not limited to the details of the foregoing illustrative embodiments, and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A device for locating a target (25) on a plane target region (10) having reference points (20) the target being indicated by a pointing gesture of a user, the device comprising:

   - two cameras (35,40), each adapted to capture an image of the target region including the reference points and at least the pointing gesture of the user (30);
   - the device being adapted to:

      - determine a linear transform between corresponding reference points from a captured image and a reference image, the transform applying for one or both images so that the coordinates of reference points are established in the reference image,
      - use the linear transform to identify points representing the projection of the pointing gesture of the user in the reference image derived from the transformed first image and to derive points of the pointing gesture from the transformed second image in the reference image,

   **characterized in that** the plane target region has at least four reference points, the device being adapted to:

      - determine the linear transform from the reference points in the captured image;
      - identify points of lines representing the projection of the pointing gesture of the user in the reference image derived from the transformed first image and from the transformed second image in the reference image;
      - determine the target point as the intersection in the reference image of the line from the first image with the line from the second image.

2. A device according to claim 1, **characterized in that** the pointing gesture is determined as a straight line defined by an eye of the user and a pointing fingertip of the user.

3. A method for locating a target (25) on a plane target region (10) having reference points (20) the target being indicated by a pointing gesture of a user (30), the method comprising:

- capturing two images of the target region including the reference points and at least the pointing gesture of the user;
- determining a linear transform between corresponding reference points from a captured image and a reference image, the transform applying for one or both images so that the coordinates of reference points are established in the reference image;
- use the linear transform to identify points representing the projection of the pointing gesture of the user in the reference image derived from the transformed first image and to derive points of the pointing gesture from the transformed second image in the reference image;

**characterized in that** the plane target region has at least four reference points, the method comprising

- determining the linear transform from the reference points in the captured image;
- identifying points of lines representing the projection of the pointing gesture of the user in the reference image derived from the transformed first image and from the transformed second image in the reference image;
- determining the target point as the intersection in the reference image of the line from the first image with the line from the second image.

4. A method according to claim 3, **characterized in that** the pointing gesture is determined as a straight line defined by an eye of the user and a pointing fingertip of the user.

**Patentansprüche**

1. Anordnung zur Orten eines Ziels (25) in einem Zielgebiet (10) mit Bezugspunkten (20), wobei das Ziel durch Zeigegebärden eines Benutzers angegeben wird, wobei die Anordnung Folgendes umfasst:

- zwei Kameras (35, 40), die je dazu vorgesehen sind, ein Bild des Zielgebiets mit den Bezugspunkten und wenigstens der Zeigegebärde des Benutzers (30) zu erfassen,
- wobei die Anordnung die nachfolgenden Aufgaben hat:
- das Ermitteln einer linearen Transformation zwischen entsprechenden Bezugspunkten aus einem erfassten Bild und einem Bezugsbild, wobei die Transformation für ein oder für beide Bilder gilt, so dass die Koordinaten der Bezugspunkte in das Bezugsbild eingeführt werden,
- das Verwenden der linearen Transformation zum Identifizieren von Punkten, welche die Projektion der Zeigegebärde des Benutzers in dem von dem transformierten ersten Bild hergeleiteten Bezugsbild darstellen und zum Herleiten von Punkten der Zeigegebärde aus dem transformierten zweiten Bild in dem Bezugsbild,

**dadurch gekennzeichnet, dass** das flache Zielgebiet wenigstens vier Bezugspunkte hat, wobei die Anordnung vorgesehen ist:

- zum Ermitteln der linearen Transformation aus den Bezugspunkten in dem erfassten Bild;
- zum Identifizieren von Punkten von Linien, welche die Projektion der Zeigegebärde des Benutzers in dem Bezugsbild darstellen, hergeleitet aus dem transformierten ersten Bild und aus dem transformierten zweiten Bild in dem Bezugsbild;
- zum Ermitteln des Zielpunktes als den Schnittpunkt in dem Bezugsbild der Linie aus dem ersten Bild mit der Linie aus dem zweiten Bild.

2. Anordnung nach Anspruch 1, **dadurch gekennzeichnet, dass** die Zeigegebärde als eine gerade Linie ermittelt wird, definiert durch ein Auge des Benutzers und eine zeigende Fingerspitze des Benutzers.

3. Verfahren zum Orten eines Ziels (25) in einem flachen Zielgebiet (10) mit Bezugspunkten (20), wobei das Ziel durch eine Zeigegebärde eines Benutzers (30) angegeben wird, wobei das Verfahren Folgendes umfasst:

- das Erfassen zweier Bilder des Zielgebietes mit den Bezugspunkten und wenigstens der Zeigegebärde des Benutzers;
- das Ermitteln einer linearen Transformation zwischen entsprechenden Bezugspunkten aus einem erfassten Bild und einem Bezugsbild, wobei die Transformation für ein Bild oder für die beiden Bilder gilt, so dass die Koordinaten von Bezugspunkten in das Bezugsbild eingeführt werden;
- das Verwenden der linearen Transformation zum Identifizieren von Punkten, welche die Projektion der Zeigegebärde des Benutzers in dem Bezugsbild darstellen, hergeleitet aus dem transformierten ersten Bild und zum Herleiten von Punkten der Zeigegebärde aus dem transformierten zweiten Bild in dem Bezugsbild;

**dadurch gekennzeichnet, dass** das flache Zielgebiet wenigstens vier Bezugspunkte hat, wobei das Verfahren Folgendes umfasst:

- das Ermitteln der linearen Transformation aus den Bezugspunkten in dem erfassten Gebiet;
- das Identifizieren von Punkten von Linien, welche die Projektion der Zeigegebärde des Benutzers in dem Bezugsbild darstellen, hergeleitet aus dem transformierten ersten Bild und aus dem transformierten zweiten Bild in dem Bezugsbild;
- das Ermitteln des Zielpunktes als der Schnittpunkt in dem Bezugsbild der Linie aus dem ersten Bild mit der Li nie aus dem zweiten Bild.

4. Verfahren nach Anspruch 3, **dadurch gekennzeichnet, dass** die Zeigegebärde als eine gerade Linie ermittelt wird, definiert durch ein Auge des Benutzers und eine zeigende Fingerspitze des Benutzers.

**Revendications**

1. Dispositif pour localiser une cible (25) dans une région cible planaire (10), dotée de points de référence (20), la cible étant indiquée par un geste de pointage d'un utilisateur, le dispositif comprenant:

- deux caméras (35, 40), chacune aménagée pour capturer une image de la région cible incluant les points de référence et au moins le geste de pointage de l'utilisateur (30);
- le dispositif étant aménagé pour:
- déterminer une transformation linéaire entre des points de référence correspondants d'une image capturée et d'une image de référence, la transformation s'appliquant à une ou aux deux images de sorte que les coordonnées de points de référence soient établies dans l'image de référence.
- utiliser la transformation linéaire pour identifier les points représentant la projection du geste de pointage de l'utilisateur dans l'image de référence dérivée de la première image transformée et pour dériver des points du geste de pointage de la deuxième image transformée dans l'image de référence,

**caractérisé en ce que** la région cible a au moins quatre points de référence, le dispositif étant aménagé pour:

- déterminer la transformation linéaire à partir des points de référence dans l'image capturée;
- identifier des points de lignes représentent la projection du geste de pointage de l'utilisateur dans l'image de référence dérivée de la première image transformée et de la deuxième image transformée dans l'image de référence;
- déterminer le point cible comme l'intersection dans l'image de référence entre la ligne à partir de la première image et la ligne à partir de la deuxième image.

2. Dispositif selon la revendication 1, **caractérisé en ce que** le geste de pointage est déterminé comme une ligne droite définie par un oeil de l'utilisateur et un bout de doigt de pointage de l'utilisateur.

3. Procédé pour localiser une cible (25) dans une région cible plane (10), dotée des points de référence (20), la cible étant indiquée par un geste de pointage d'un utilisateur (30), le procédé comprenant:

- une capture de deux images de la région cible incluant les points de référence et au moins le geste de pointage de l'utilisateur;
- le dispositif étant aménagé pour:
- déterminer une transformation linéaire entre des points de référence correspondants d'une image capturée et d'une image de référence, la transformation s'appliquant à une ou aux deux images de sorte que les coordonnées de points de référence soient établies dans l'image de référence.
- utiliser la transformation linéaire pour identifier des points représentant la projection du geste de pointage de l'utilisateur dans l'image de référence dérivée de la première image transformée et pour dériver des points du geste de pointage de la deuxième image transformée dans l'image de référence,

**caractérisé en ce que** la région cible plane est au moins dotée de quatre points de référence, le procédé comprenant:

- une détermination de la transformation linéaire à partir des points de référence dans l'image capturée;
- une identification de points de lignes représentant la projection du geste de pointage de l'utilisateur dans l'image de référence dérivée de la première image transformée et de la deuxième image transformée dans l'image de référence;
- une détermination du point cible comme l'intersection dans l'image de référence entre la ligne à partir de la première image et la ligne à partir de la deuxième image.

4. Procédé selon la revendication 3, **caractérisé en ce que** le geste de pointage est déterminé comme une ligne droite définie par un oeil de l'utilisateur et un bout de doigt de pointage de l'utilisateur.

FIG. 1

FIG. 2

FIG. 3

FIG. 4

**FIG. 5**

**FIG. 6**

235

240

260

265

1  2

3  4

5  6

7  8

226

SCREEN 270

205

200

FIG. 7

6

5

210

215

8

7

FIG. 8

FIG. 9

FIG. 10

MEMORY
310

NON-VOLATILE
STORAGE
320

IMAGE
PROCESSOR
305

301

302

x,y

APPLICATION
PROCESS
330

OUTPUT
DEVICE
340

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 09488028 A
- US 09532820 B
- US 08995823 B
- US 99667797 A
- US 5187574 A
- US 5454043 A